# EUROPEAN PATENT APPLICATION

(11) **EP 1 872 659 A2**
(43) Date of publication of application: **02.01.2008**
(21) Application number: 07110959.9
(22) Date of filing: 25.06.2007
(51) Int. Cl.: A21B 1/22, A21B 1/40

(54) **Structure of a baking chamber for ovens**

(30) Priority: 30.06.2006 IT PS20060014 U
(71) Applicant: Moretti Forni S.p.A., 61037 Mondolfo (PU) (IT)
(72) Inventor: Moretti, Marco, 61100, Pesaro (IT)

(57) **Abstract**

Baking chamber structure for ovens, especially food ovens for professional use, characterized by subdivided areas (6A, 6B) with differential heating by means of independent heating elements (3A, 3B, 5A, 5B) and heat sensors (7A, 7B) as well as area (6A, 6B) partition walls (10) and a cooking surface (6A, 6B) on at least two levels (8).

## Description

### DESCRIPTION

### Background of the invention

In the professional use of food ovens, such as pizzerias, restaurants and the like, the need for differentiated cooking temperatures is very important so that the various foods can be cooked at their ideal temperatures.

According to the noted technique, this need can be met by increasing the number of cooking instruments - with obvious drawbacks in terms of cost and size of such a solution - or, more empirically, by adjusting the oven to meet the needs of the specific food that is eventually cooked - which however increases the operating times - or even yet, if possible, by reducing the stay in the oven for foods that require lower temperatures - which does not respect the organoleptic character of the foods and forebodes errors due to the fact that that food was not given the special attention required.

### Purpose of the invention

In regard to that mentioned above, the main objective of this document is thus to provide an innovative food oven that meets the professional's needs to cook at different temperatures.

Another objective is to achieve the previously mentioned goal through an innovative concept that makes it easier to check foods inside the baking chamber and likewise facilitating their insertion and removal.

Yet another objective is to achieve the previously mentioned goal through an innovative concept that does not disrupt the normal work systems used by the professionals and can be adapted to the pre-existing structures.

Another objective is to achieve the previously mentioned goal through a simple and effective solution that is safe to use and is relatively inexpensive considering the results that can be obtained.

### Summary of the invention

These and other objectives can be achieved with the baking chamber structure for ovens, especially food ovens for professional use, which includes subdivided areas (6A, 6B) and differential heating by means of independent heating elements (3A, 3B, 5A, 5B) and heat sensors (7A, 7B) as well as area (6A, 6B) partition walls (10) and a cooking surface (6A, 6B) on at least two levels (8).

### Brief description of the drawings

Further characteristics and advantages of the baking chamber mentioned in this document are given in the detailed description that follows for a common model. This is only an example and is not limited to the three attached drawings, in that:
Figure 1 shows a perspective view of the baking chamber;
Figure 2 shows a perspective view of the baking chamber with certain parts given in a cutaway view to better highlight others;

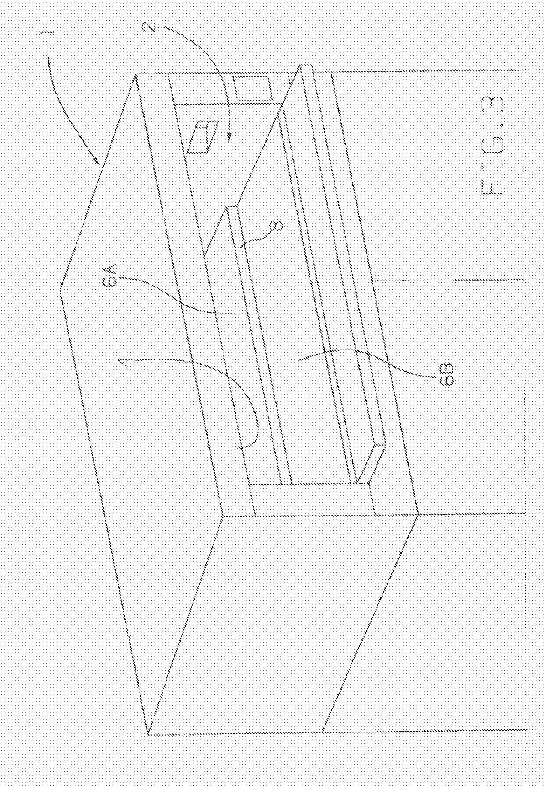

Figure 3 shows a schematic perspective view of a professional food oven that includes the structure of the baking chamber.

### Static description of the preferred embodiment

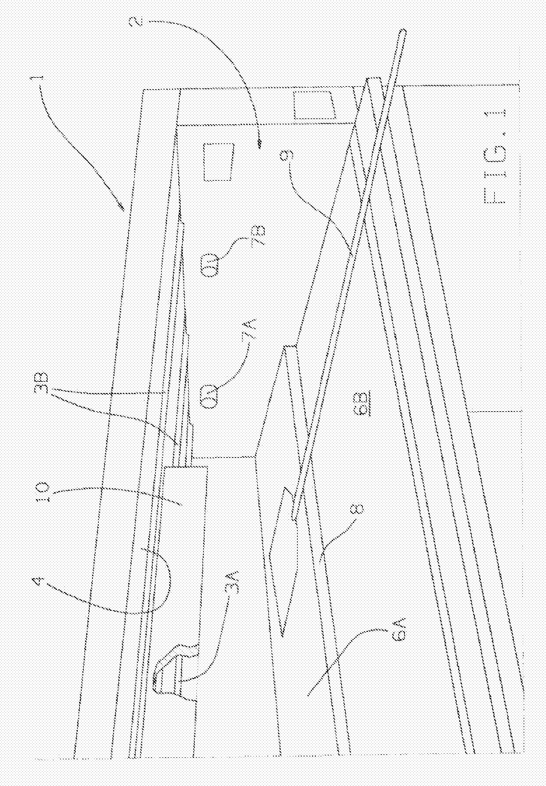

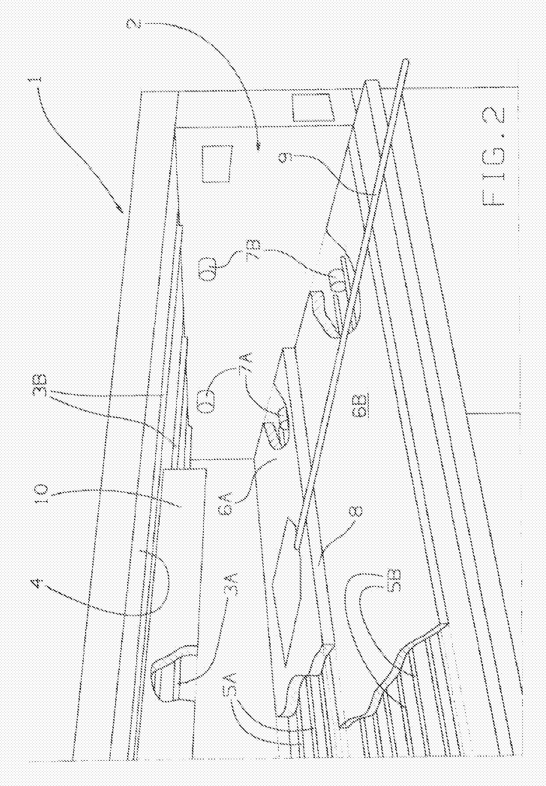

With reference to these figures, the number 1 from figure 1 indicates a professional food oven of the type used in pizzerias, which has an electrically heated baking chamber 2 with heating elements 3 located both on the roof 4 of the chamber and below 5 the cooking surface 6 (also see figure 2).

Both the upper 3A and lower 5A rear (distal) electric heating elements are independent and have distal heat sensors 7A to regulate the temperature.

Both the upper 3B and lower 5B front (proximal) electric heating elements are also independent but instead have proximal heat sensors 7B to regulate the temperature.

The cooking surface 6 has a transversal step 8 in a raised back portion 6A and in a lowered front portion 6B, as seen in figures 1 and 2 along with a baker's peel to give a better idea of the difference in level.

From the chamber roof 4, there is a transversal partition 10 near the step 8.

And finally, the cooking surface 6 is preferably inclined towards the front at a maximum angle of 5° for the functions specified below.

### Dynamic description of the preferred embodiment

Following the static description of a preferred baking chamber structure, a dynamic or functional description will now be given:

Inside the baking chamber 2, thermal induction areas can be obtained that are different from the distal area 6A with respect to the proximal area 6B. This is done through differential heating of the distal electric heating elements 3A and 5A, adjusted and controlled by distal heat sensors 7A, with respect to the heating of the proximal heating elements 3B and 5B, which are adjusted and controlled by proximal heat sensors 7B.

This heating area differentiation is magnified by the upper partition 10, which essentially creates two separate environments of the circulating convective air.

Meanwhile, the cooking surface 6 is separated into a distal portion 6A and a proximal portion 6B. Besides visually separating the two differentiated heat areas, it allows the cooking food to be examined and the relative placing and removal with the baker's peel 9, which can be further facilitated by increasing the forward slope of the cooking surface 6 by up to 5°. If the slope is greater than this, the food products placed on the surfaces, such as pizzas, could slide in the direction of the slope.

As such the baking chamber 2 has two distinct cooking temperatures, allowing foods with different characteristics to be cooked in one oven.

### Alternative configurations

It is clear that there are alternative ways of achieving this, while using the innovative concept given by the example above and asserted below, the baking chamber presented here can be realized with similar techniques and mechanics, or outfitted differently, just as all the structures of the relative constituents can be varied to achieve the goal.

Particularly:

A variety of shelves with a variety of levels can be provided.

The sloping partitions can be set up in different ways, with eventual continuations where the location and/or extension and/or projection can be adjusted.

The concept can also be applied to ovens using other heating systems, for example natural gas, differentiated burners and/or differentiation of the hot air ducts.

### Advantages of the invention

As from the detailed description given above of a preferred example and with reference to some variations, the baking chamber presented here offers advantages that meet the preset objectives as well as others: it is a functional, modular, multipurpose and economic solution designed to contemporaneously cook foods requiring different temperatures in just one oven.

This baking chamber also offers an advantage in the way of energy, by allowing only one portion of the oven to be used when the cooking needs are limited.

### REFERENCE OF NUMBERS

- 1): oven
- 2): baking chamber
- 3A): upper distal electric heating elements
- 3B): upper proximal electric heating elements
- 4): roof of the baking chamber
- 5A): lower distal electric heating elements
- 5B): lower proximal electric heating elements
- 6A): raised distal portion of the cooking surface
- 6B): lowered proximal portion of the cooking surface
- 7A): distal heat sensors
- 7B): proximal heat sensors
- 8): step
- 9): baker's peel
- 10): partition

## Claims

1. Baking chamber structure for ovens, especially food ovens for professional use, **characterized by** the fact that it includes subdivided areas (6A, 6B) with differential heating by means of independent heating elements (3A, 3B, 5A, 5B) and independent heat sensors (7A, 7B).

2. Baking chamber structure for ovens, especially food ovens for professional use, **characterized by** the fact that it includes subdivided areas (6A, 6B) with differential heating by means of independent heating elements (3A, 3B, 5A, 5B) and independent heat sensors (7A, 7B) as well as area (6A, 6B) partition walls (10) and a cooking surface (6A, 6B) on at least two levels (8).

3. Baking chamber according to the preceding first or second claim above **characterized by** the fact that it includes:
- a baking chamber (2) heated by electrical heating elements (3) located both on the roof (4) of the chamber and below (5) the cooking surface (6);
- independent upper (3A) and lower (5A) distal electric heating elements controlled by distal heat sensors (7A) which regulate the temperature;
- independent upper (3B) and lower (5B) proximal electric heating elements controlled by proximal heat sensors (7B) which regulate the temperature.

4. Baking chamber according to the preceding claims above **characterized by** the fact that it includes a pair of distal heat sensors (7A) adjacent to the upper distal electric heating elements (3A) and to the lower distal electric heating elements (5A) below the cooking surface (6).

5. Baking chamber according to the preceding claims above **characterized by** the fact that it includes a pair of proximal heat sensors (7B) adjacent to the upper proximal electric heating elements (3B) and to the lower proximal electric heating elements (5B) below the cooking surface (6).

6. Baking chamber according to the preceding claims above **characterized by** the fact that said cooking surface (6) has a transversal step (8) in a raised back portion (6A) and in a lowered front portion (6B).

7. Baking chamber according to the preceding claims above **characterized by** the fact that at least one transverse partition (10) slopes from the chamber roof (4) near the step (8).

8. Baking chamber according to the preceding claims above **characterized by** the fact that multiple consecutive transverse partitions (10) slope from the chamber roof (4) near the step (8).

9. Baking chamber structure for ovens similar according to the preceding claims above **characterized by** the fact that it includes any number of independent heating elements (3), independent heat sensors (7), steps (8) and partitions (10) in order to create any number of independent heating areas.

10. Baking chamber according to the preceding claims above **characterized by** the fact that the cooking surface (6) is sloped forward.

11. Baking chamber according to the preceding claims above **characterized by** the fact that the cooking surface (6) is sloped forward at a maximum angle of approximately 5°.
